# EUROPEAN PATENT APPLICATION

(11) **EP 3 543 485 A1**
(43) Date of publication of application: **25.09.2019**
(21) Application number: 19152314.1
(22) Date of filing: 17.01.2019
(51) Int. Cl.: F01K 25/08, F01K 23/02, F01K 13/00

(54) **WORKING MEDIUM LEAKAGE DETECTION DEVICE AND THERMAL ENERGY RECOVERY DEVICE**

(30) Priority: 22.03.2018 JP 2018054218
(71) Applicant: Kabushiki Kaisha Kobe Seiko Sho (Kobe Steel, Ltd.), Kobe-shi, Hyogo 651-8585 (JP)
(72) Inventor: ADACHI, Shigeto, Takasago-shi,, Hyogo 676-8670 (JP); NISHIMURA, Kazumasa, Takasago-shi,, Hyogo 676-8670 (JP); ARAHIRA, Kazuya, Takasago-shi,, Hyogo 676-8670 (JP)
(74) Representative: TBK

(57) **Abstract**

The present invention is to provide a working medium leakage detection device capable of suppressing erroneous detection of a sensor which is capable of detecting a working medium.

A working medium leakage detection device includes a first sensor formed by a sensor capable of detecting a working medium, a second sensor formed by a sensor capable of detecting the working medium, and a control unit that makes an output indicating leakage of the working medium when the first sensor detects the working medium whereas the second sensor does not detect the working medium. The first sensor is arranged to detect the working medium in a casing in an evaporator connected to a suction air line through which air supplied from a supercharger to an engine flows and a circulation flow passage through which the working medium flows, and the second sensor is arranged to detect the working medium in neither the evaporator nor a part of the suction air line on the downstream side of the evaporator.

## Description

### BACKGROUND OF THE INVENTION

### (FIELD OF THE INVENTION)

The present invention relates to a working medium leakage detection device and a thermal energy recovery device.

### (DESCRIPTION OF THE RELATED ART)

Conventionally, there is a known thermal energy recovery system that recovers heat of supercharged air supplied from a supercharger to an engine. For example, JP 2015-200182 A discloses an exhaust heat recovery system (thermal energy recovery system) including an engine, a supercharger having a turbine and a compressor, and an exhaust heat recovery device that recovers heat of supercharged air supplied from the supercharger to the engine. The turbine is driven by an exhaust gas discharged from the engine. The compressor is connected to the turbine, and discharges the supercharged air. The exhaust heat recovery device includes an evaporator that evaporates a working medium, an expander, a power recovery machine, a condenser, and a pump. The evaporator is provided in a suction air line connecting the compressor of the supercharger and the engine. That is, with the exhaust heat recovery device, in the evaporator, the working medium receives heat from the supercharged air before supply to the engine, and this thermal energy is recovered by the power recovery machine via the expander.

With the thermal energy recovery system as described in JP 2015-200182 A, in a case where a so-called fin-and-tube evaporator is used, and when the working medium is leaked from a heat transfer tube in the evaporator, the working medium flows into the engine. In order to detect leakage of the working medium, it is thought that a sensor capable of detecting the leakage of the working medium in the evaporator is provided. However, drain is generated in the evaporator and this drain contains components other than the working medium (sulfur component, etc. contained in the exhaust gas which is suctioned by the compressor). Thus, there is a concern about erroneous detection of the sensor due to contact between the sensor and the drain.

### (SUMMARY OF THE INVENTION)

An object of the present invention is to suppress erroneous detection of a sensor capable of detecting a working medium.

In order to achieve the above object, the present invention is a working medium leakage detection device including a first sensor formed by a sensor capable of detecting a working medium, a second sensor formed by a sensor capable of detecting the working medium, and a control unit that makes an output indicating leakage of the working medium when the first sensor detects the working medium whereas the second sensor does not detect the working medium. The first sensor is arranged to detect the working medium in an air flow passage in a heater connected to a suction air line through which air supplied from a supercharger to an engine flows and a circulation flow passage through which the working medium flows, or to detect the working medium in a part of the suction air line on the downstream side of the heater. The second sensor is arranged to detect the working medium in neither the air flow passage in the heater nor the part of the suction air line on the downstream side of the heater.

In the present invention, the first sensor is arranged to detect the working medium in the air flow passage in the heater, or arranged to detect the working medium in the suction air line on the downstream side of the heater. Meanwhile, the second sensor is arranged to detect the working medium in neither the air flow passage in the heater nor the part of the suction air line on the downstream side of the heater. Therefore, when the first sensor detects the working medium whereas the second sensor does not detect the working medium, in the heater, the working medium of the circulation flow passage is leaked in the air flow passage or in the suction air line. Thus, by the control unit making the output indicating the leakage of the working medium when the first sensor detects the working medium whereas the second sensor does not detect the working medium, it is possible to detect the leakage of the working medium to the air flow passage or the suction air line while eliminating a possibility of erroneous detection of the first sensor.

The working medium leakage detection device may further include a take-out flow passage with which part of the air is taken out from the air flow passage of the heater, or a part of the suction air line between the heater and the engine, and a water content removal mechanism provided in the take-out flow passage, the water content removal mechanism that removes water contents contained in the air. In this case, the first sensor may be arranged in the take-out flow passage.

In this aspect, by the water content removal mechanism, the water contents are removed from the air taken out from the air flow passage in the heater or the part of the suction air line between the heater and the engine in the take-out flow passage. Therefore, the first sensor arranged in the take-out flow passage detects whether or not there is the working medium in the air from which the water contents are removed. That is, contact of a liquid (water, etc.) containing components other than the working medium with the first sensor is suppressed. Therefore, it is possible to reduce a possibility that the first sensor erroneously detects water connects other than the working medium as the working medium. It is also possible to suppress occurrence of corrosion of the first sensor.

The water content removal mechanism may include a drain trap that permits passage of a liquid and inhibits passage of a gas, and in this case, the first sensor may be arranged on the upper side of the drain trap in the take-out flow passage.

In this aspect, when a certain amount (concentration) of the working medium is accumulated in a part of the take-out flow passage between the drain trap and the first sensor, a liquid component is detected by the first sensor. Thus, erroneous detection is more reliably suppressed.

The take-out flow passage may have a main flow passage in which the water content removal mechanism is provided, and a branch flow passage branching from the main flow passage. In this case, the first sensor may be arranged in the branch flow passage.

In this aspect, the branch flow passage branches from the main flow passage in which the water content removal mechanism is arranged. Thus, the air from which the water contents are removed easily flows into the branch flow passage. As a result, erroneous detection and occurrence of corrosion of the first sensor arranged in the branch flow passage can be more suppressed.

The water content removal mechanism may further have a dryer provided in a connection portion between the main flow passage and the branch flow passage, the dryer that removes water contents contained in the air. In this aspect, it is possible to more suppress contact of water contents with the first sensor.

The water content removal mechanism may have a dryer that removes water contents contained in the air. In this aspect, it is possible to more suppress contact of water contents with the first sensor.

The working medium leakage detection device may further include a discharge flow passage through which the water contents removed by the dryer are discharged, and a drain trap provided in the discharge flow passage, the drain trap that permits passage of a liquid and inhibits passage of a gas.

In this aspect, while the water contents removed by the dryer are discharged through the discharge flow passage, a gas is not discharged from the drain trap. By reliably discharging the water contents removed by the dryer, it is possible to prevent erroneous detection of the sensor due to the water contents.

At least one of the first sensor and the second sensor may include a semiconductor sensor capable of detecting water contents, the working medium, carbon monoxide, hydrogen sulfide, and ammonia, and an infrared sensor capable of detecting water contents, the working medium, carbon monoxide, carbon dioxide, sulfur dioxide, and nitrogen oxide.

In this aspect, detection precision of the working medium is enhanced. Specifically, although both the semiconductor sensor and the infrared sensor detect water contents, the water contents are substantially removed by the water content removal mechanism. Therefore, in a case where detection signals are outputted from both the semiconductor sensor and the infrared sensor, it is possible to judge that the gas detected by these sensors is the working medium.

The working medium leakage detection device may further include a carbon monoxide removal portion capable of removing carbon monoxide.

Both the semiconductor sensor and the infrared sensor are capable of detecting carbon monoxide. However, by providing the carbon monoxide removal portion, it is possible to more enhance the detection precision of the working medium by the sensor.

The take-out flow passage may have a hole for forming a flow of the air running from an upstream side end portion of the take-out flow passage to the first sensor. In this aspect, the flow of the supercharged air running from the upstream side end portion of the take-out flow passage to the first sensor is formed. Thus, it is possible to enhance the detection precision by the first sensor.

The present invention is a thermal energy recovery device including a heater connected to a suction air line through which air supplied from a supercharger to an engine flows and a circulation flow passage through which a working medium flows, a power recovery machine connected to an expander to be driven by the working medium on the downstream side of the heater in the circulation flow passage, and the above working medium leakage detection device.

In the present invention, it is possible to detect that the working medium flowing through the circulation flow passage of the thermal energy recovery device is leaked to the suction air line. Therefore, it is possible to suppress that the working medium is suctioned to the engine.

The thermal energy recovery device may further include a condenser provided on the upstream side of the heater in the circulation flow passage, an expander provided on the downstream side of the heater in the circulation flow passage, a first on/off valve provided in a part of the circulation flow passage between the condenser and the heater, and a second on/off valve provided in a part of the circulation flow passage between the heater and the expander. In this case, the control unit may close the first on/off valve and the second on/off valve when making the output indicating the leakage of the working medium.

In this aspect, the heater is separated from the circulation flow passage. Thus, leakage of the working medium from the heater can be suppressed.

As described above, according to the present invention, it is possible to suppress erroneous detection of the sensor capable of detecting the working medium.

### BRIEF DESCRIPTION OF THE DRAWINGS

FIG. 1 is a view schematically showing a configuration of a thermal energy recovery device of a first embodiment of the present invention.
FIG. 2 is a flowchart for describing control actions of a control unit provided in the thermal energy recovery device.
FIG. 3 is a view schematically showing a configuration of a thermal energy recovery device of a second embodiment of the present invention.
FIG. 4 is a view schematically showing a configuration of a thermal energy recovery device of a third embodiment of the present invention.
FIG. 5 is a view schematically showing a configuration of a thermal energy recovery device of a fourth embodiment of the present invention.
FIG. 6 is a view schematically showing a modified example of the thermal energy recovery device of the fourth embodiment of the present invention.
FIG. 7 is a view schematically showing a configuration of a thermal energy recovery device of a fifth embodiment of the present invention.
FIG. 8 is a flowchart for describing control actions of a control unit provided in the thermal energy recovery device of the fifth embodiment.
FIG. 9 is a view schematically showing a configuration of a thermal energy recovery device of a sixth embodiment of the present invention.
FIG. 10 is a view schematically showing a modified example of the thermal energy recovery device of the sixth embodiment of the present invention.
FIG. 11 is a view schematically showing a configuration of a thermal energy recovery device of a seventh embodiment of the present invention.
FIG. 12 is a view schematically showing a configuration of a thermal energy recovery device of an eighth embodiment of the present invention.
FIG. 13 is a view schematically showing a modified example of a water content removal mechanism.
FIG. 14 is a view schematically showing a modified example of the water content removal mechanism.
FIG. 15 is a view schematically showing a modified example of a coupling position of a working medium leakage detection device.

### DESCRIPTION OF THE PREFERRED EMBODIMENTS

Hereinafter, embodiments will be described with reference to the drawings.

### (First Embodiment)

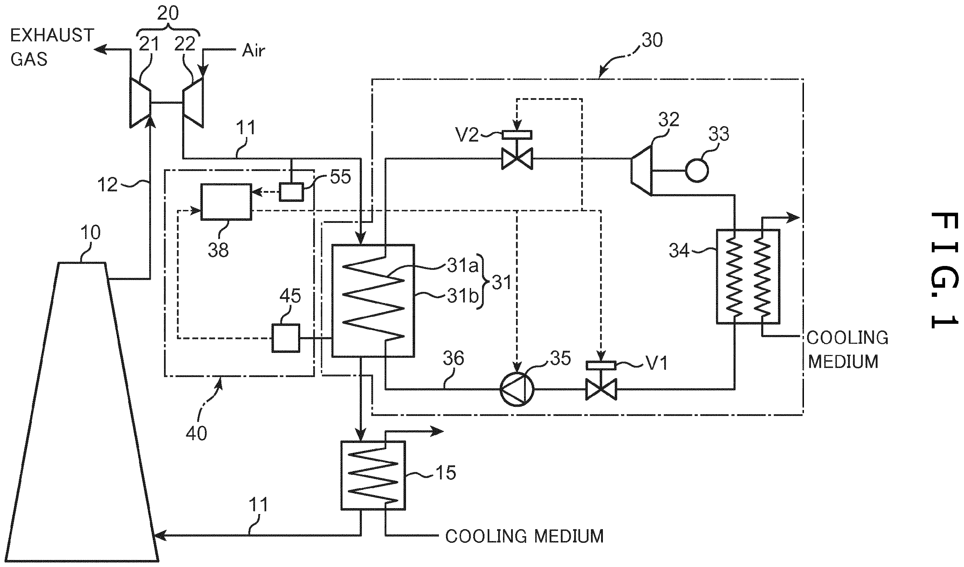

A thermal energy recovery device of a first embodiment will be described with reference to FIG. 1. This thermal energy recovery device includes a thermal energy recovery unit 30 that recovers thermal energy of air flowing from an engine 10 to a supercharger 20, and a working medium leakage detection device 40 for detecting leakage of a working medium used in the recovery unit 30.

The supercharger 20 has a turbine 21 to be driven by an exhaust gas discharged from the engine 10, and a compressor 22 connected to the turbine 21, the compressor that discharges supercharged air to be supplied to the engine 10. The supercharged air discharged from the compressor 22 is supplied to the engine through a suction air line 11 connecting the compressor 22 and the engine. The exhaust gas discharged from the engine 10 is supplied to the turbine 21 through an exhaust air line connecting the engine 10 and the turbine 21.

In the present embodiment, an air cooler 15 is provided in the suction air line 11. The air cooler 15 cools the supercharged air to be supplied to the engine 10 with a cooling medium (seawater, etc.) In the present embodiment, a so-called fin-and-tube air cooler is used as the air cooler 15. The air cooler 15 can be omitted.

The thermal energy recovery unit 30 includes an evaporator 31, an expander 32, a power recovery machine 33, a condenser 34, a pump 35, a circulation flow passage 36, a first on/off valve V1, a second on/off valve V2, and a control unit 38. The circulation flow passage 36 connects the evaporator 31, the expander 32, the condenser 34, and the pump 35 in this order.

The evaporator 31 is provided in a part of the suction air line 11 between the compressor 22 and the air cooler 15. Therefore, the evaporator 31 is connected to the suction air line 11 and the circulation flow passage 36. That is, the evaporator 31 functions as a heater connected to the suction air line 11 and the circulation flow passage 36. The evaporator 31 evaporates the working medium by exchanging heat between the supercharged air discharged from the compressor 22 (to be supplied to the engine 10) and the working medium having a boiling point lower than a boiling point of the air and having specific gravity greater than specific gravity of the air (for example, R245fa). In the present embodiment, a so-called fin-and-tube evaporator is used as the evaporator 31. That is, the evaporator 31 has a heat transfer tube 31a through which the working medium flows, and a casing 31b that accommodates the heat transfer tube 31a. In this evaporator 31, as the supercharged air discharged from the compressor 22 passes through the inside of the casing 31b, the working medium in the heat transfer tube 31a is evaporated. Therefore, the casing 31b functions as an air flow passage serving as a flow passage through which the supercharged air flows.

The expander 32 is provided in a part of the circulation flow passage 36 on the downstream side of the evaporator 31. The expander 32 expands the gas-phase working medium flowing out of the evaporator 31. In the present embodiment, a volumetric screw expander having a rotor to be driven and rotated by expansion energy of the gas-phase working medium is used as the expander 32.

The power recovery machine 33 is connected to the rotor (not shown) of the expander 32. The power recovery machine 33 is rotated in accordance with working of the expander 32. Thereby, in the power recovery machine 33, it is possible to recover energy of the working medium as power. In the present embodiment, a power generator is used as the power recovery machine 33. A compressor, etc. may be used as the power recovery machine 33.

The condenser 34 is provided in a part of the circulation flow passage 36 on the downstream side of the expander 32. The condenser 34 condenses the working medium by exchanging heat between the working medium flowing out of the expander 32 and a cooing medium (seawater, etc.)

The pump 35 is provided in a part of the circulation flow passage 36 on the downstream side of the condenser 34 (the part between the condenser 34 and the evaporator 31). The pump 35 pressurizes the working medium so that the liquid-phase working medium flowing out of the condenser 34 is fed to the evaporator 31.

The first on/off valve V1 is provided in a part of the circulation flow passage 36 between the condenser 34 and the evaporator 31. More specifically, the first on/off valve V1 is provided in a part of the circulation flow passage 36 between the condenser 34 and the pump 35. The second on/off valve V2 is provided in a part of the circulation flow passage 36 between the evaporator 31 and the expander 32. The on/off valves V1 and V2 are formed to be capable of opening/closing the circulation flow passage 36.

The working medium leakage detection device 40 is a unit capable of detecting that the working medium is leaked in the evaporator 31. The working medium leakage detection device 40 has a first sensor 45, a second sensor 55, and the control unit 38.

The first sensor 45 is provided in the casing 31b of the evaporator 31. The first sensor 45 is formed by a sensor capable of detecting the working medium (for example, R245fa), and provided for detecting whether or not the working medium is contained in the air in the casing 31b. The first sensor 45 outputs a signal corresponding to concentration of the working medium. The signal outputted from the first sensor 45 is inputted to the control unit 38.

The second sensor 55 is arranged in a part of the suction air line 11 on the upstream side of the evaporator 31. As well as the first sensor 45, the second sensor 55 is formed by a sensor capable of detecting the working medium (for example, R245fa), and provided for detecting whether or not the working medium is contained in the air flowing in the suction air line 11 on the upstream side of the evaporator 31. The second sensor 55 outputs a signal corresponding to concentration of the working medium. The signal outputted form the second sensor 55 is inputted to the control unit 38.

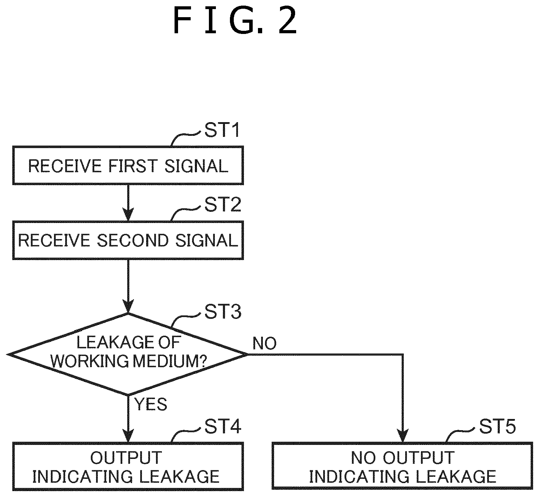

The control unit 38 makes an output indicating the leakage of the working medium based on the signal outputted form the first sensor 45 and the signal outputted from the second sensor 55. Specifically, as shown in FIG. 2, the control unit 38 receives the signal from the first sensor 45 (first signal), and receives the signal from the second sensor 55 (second signal) (Steps ST1 and ST2). The control unit 38 determines whether or not the working medium is leaked in the evaporator 31 from the first signal and the second signal (Step ST3). Specifically, in a case where the concentration of the working medium indicated by the first signal is not less than concentration indicating that the working medium is contained in the air, and the concentration of the working medium indicated by the second signal is less than the concentration indicating that the working medium is contained in the air (YES in Step ST3), the control unit 38 makes an output indicating the leakage of the working medium from the evaporator 31 (Step ST4). This is because, in this case, the working medium is not detected by the second sensor 55 and thereby the working medium detected by the first sensor 45 can be judged as the working medium leaked from the evaporator 31.

Meanwhile, (1) in a case where the concentration of the working medium indicated by the first signal is not less than the concentration indicating that the working medium is contained in the air, and the concentration of the working medium indicated by the second signal is not less than the concentration indicating that the working medium is contained in the air, or (2) in a case where the concentration of the working medium indicated by the first signal is less than the concentration indicating that the working medium is contained in the air (NO in Step ST3), the output indicating the leakage of the working medium from the evaporator 31 is not made (Step ST5). This is because, in this case, even upon detection of the working medium by the first sensor 45, the working medium can be judged as not the working medium leaked from the evaporator 31 but as the working medium flowing down the suction air line 11 from the upstream side of the evaporator 31.

The output indicating the leakage of the working medium from the evaporator 31 is used as a control signal for closing the first on/off valve V1 and the second on/off valve V2. Therefore, when the leakage of the working medium is detected, the first on/off valve V1 and the second on/off valve V2 are closed. The output indicating the leakage of the working medium may include an output of a control signal for stopping the pump 35 in addition to the output of the control signal for closing the on/off valves V1 and V2. In this case, the on/off valves V1 and V2 are closed and the pump 35 is stopped. Therefore, when the leakage of the working medium is detected, the working medium is suppressed from flowing into the evaporator 31. The output indicating the leakage of the working medium from the evaporator 31 may be used as a control signal for an alarm.

As described above, in the working medium leakage detection device 40 of the present embodiment, the first sensor 45 is arranged to detect; the working medium in the casing 31b in the evaporator 31. Meanwhile, the second sensor 55 is arranged to detect the working medium in neither the evaporator 31 nor a part of the suction air line 11 on the downstream side of the evaporator 31. Therefore, when the first sensor 45 detects the working medium whereas the second sensor 55 does not detect the working medium, in the evaporator 31, the working medium in the heat transfer tube 31a is leaked in the casing 31b. Thus, by the control unit 38 making the output indicating the leakage of the working medium when the first sensor 45 detects the working medium whereas the second sensor 55 does not detect the working medium, it is possible to detect the leakage of the working medium to the casing 31b or the suction air line 11 while eliminating a possibility of erroneous detection of the first sensor 45.

In the present embodiment, it is possible to detect that the working medium flowing through the circulation flow passage 36 of the thermal energy recovery device is leaked to the suction air line 11. Therefore, it is possible to suppress that the working medium is suctioned to the engine 10.

The control unit 38 closes the first on/off valve V1 and the second on/off valve V2 when the leakage of the working medium is detected. Thereby, the evaporator 31 is separated from the circulation flow passage 36. Thus, the leakage of the working medium from the evaporator 31 is suppressed.

### (Second Embodiment)

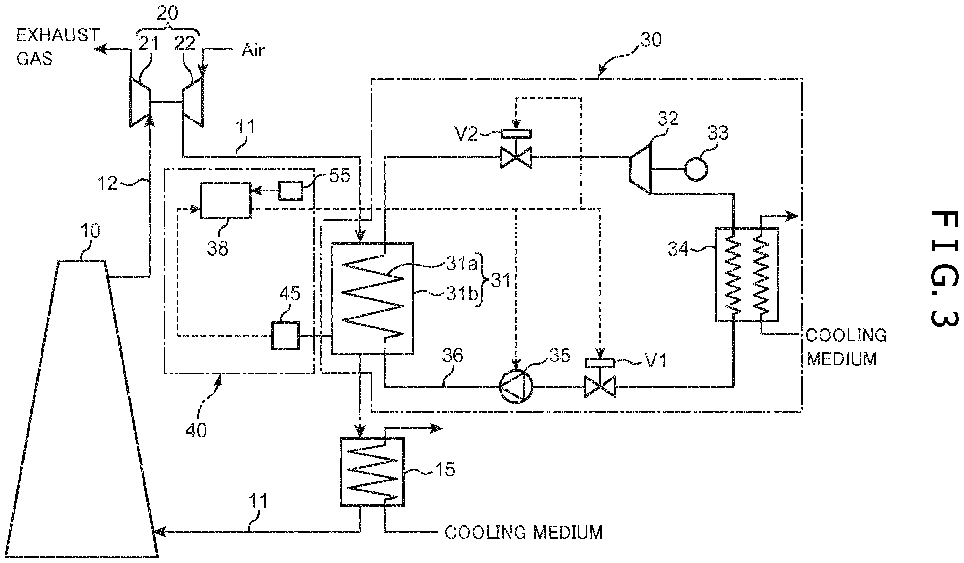

With reference to FIG. 3, a thermal energy recovery device of a second embodiment will be described. In the second embodiment, only the parts different from the first embodiment will be described, and the same structures, the same operations, and the same effects as the first embodiment will not be described.

In the first embodiment, the second sensor 55 detects the working medium contained in the supercharged air that flows to the evaporator 31 in the suction air line 11. Meanwhile, in the second embodiment, as shown in FIG. 3, a second sensor 55 detects a working medium contained in the atmosphere. That is, the second sensor 55 is not limited to arrangement in a suction air line 11 on the upstream side of an evaporator 31 but is installed around the thermal energy recovery device. In other words, the second sensor 55 is only required to be arranged to detect the working medium in neither an air flow passage in a heater such as the evaporator 31 nor a part of the suction air line 11 on the downstream side of the heater. In this case, by referring to a signal from the second sensor 55, it is also possible to determine whether or not the working medium detected by a first sensor 45 is due to leakage from the evaporator 31. Therefore, by a control unit 38 performing the same control actions as the control actions shown in FIG. 2, it is possible to determine whether or not the working medium is leaked from the evaporator 31 while eliminating a possibility of erroneous detection of the first sensor 45.

The mode in which the second sensor 55 detects the working medium contained in the atmosphere can also be adopted in the following third to eighth embodiments.

### (Third Embodiment)

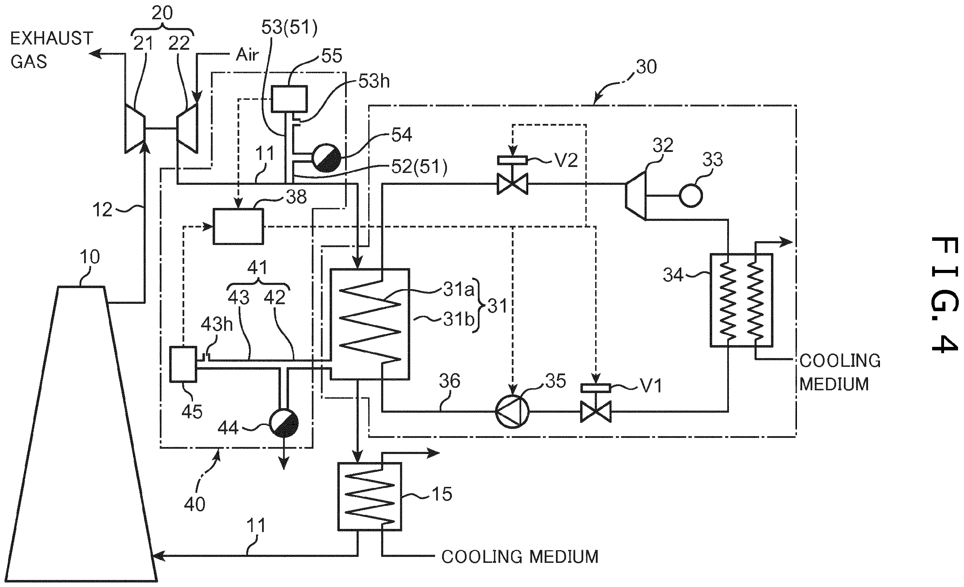

Next, with reference to FIG. 4, a thermal energy recovery device of a third embodiment of the present invention will be described. In the third embodiment, only the parts different from the first embodiment will be described, and the same structures, the same operations, and the same effects as the first embodiment will not be described.

In the third embodiment, a take-out flow passage (first take-out flow passage) 41 serving as a flow passage through which part of supercharged air is taken out is provided in a region ranging from an evaporator 31 to an engine 10, and a first sensor 45 is arranged in the take-out flow passage 41. In the present embodiment, one end portion of the take-out flow passage 41 is coupled to a lower portion of a casing 31b of an evaporator 31. Therefore, part of the supercharged air in the casing 31b of the evaporator 31 flows into the take-out flow passage 41.

The take-out flow passage 41 has a main flow passage (first main flow passage) 42 whose one end (upstream side end portion) is connected to the casing 31b, and a branch flow passage (first branch flow passage) 43 branching from an intermediate portion of the main flow passage 42. A downstream side end portion (the other end) of the main flow passage 42 is positioned on the lower side of the upstream side end portion of the main flow passage 42. A downstream side end portion of the branch flow passage 43 is positioned on the upper side of the downstream side end portion of the main flow passage 42. A hole 43h for forming a flow of the supercharged air running from the main flow passage 42 to the downstream side end portion of the branch flow passage 43 is provided in the branch flow passage 43. The take-out flow passage 41 may be connected to a part of a suction air line 11 on the downstream side of the evaporator 31.

A water content removal mechanism that removes a liquid component contained in the air is provided in the take-out flow passage 41. Specifically, the water content removal mechanism includes a drain trap 44 that permits passage of a liquid and inhibits passage of a gas. The drain trap 44 is provided in a part of the main flow passage 42 on the downstream side of a connection portion between the main flow passage 42 and the branch flow passage 43.

The first sensor 45 is provided in a part of the take-out flow passage 41 branching from the upstream side of the drain trap 44. Specifically, the first sensor 45 is provided in the downstream side end portion of the branch flow passage 43. The first sensor 45 is positioned on the upper side of the drain trap 44.

In the third embodiment, a second take-out flow passage 51 serving as a flow passage through which part of the supercharged air is taken out is provided in a part of the suction air line 11 on the upstream side of the evaporator 31. A second sensor 55 is arranged in the second take-out flow passage 51.

The second take-out flow passage 51 has a second main flow passage 52 whose one end (upstream side end portion) is connected to the suction air line 11, and a second branch flow passage 53 branching from an intermediate portion of the second main flow passage 52. A downstream side end portion (the other end) of the second main flow passage 52 is positioned on the lower side of the upstream side end portion of the second main flow passage 52. A downstream side end portion of the second branch flow passage 53 is positioned on the upper side of the upstream side end portion of the second main flow passage 52. The second sensor 55 is arranged in the downstream side end portion of the second branch flow passage 53. A hole 53h for forming a flow of the supercharged air running from the second main flow passage 52 to the downstream side end portion of the second branch flow passage 53 is provided in the second branch flow passage 53.

A second drain trap 54 is provided in the second take-out flow passage 51. Specifically, the second drain trap 54 is provided in a part of the second main flow passage 52 on the downstream side of a connection portion between the second main flow passage 52 and the second branch flow passage 53. The second drain trap 54 permits passage of a liquid and inhibits passage of a gas.

In the thermal energy recovery device of the third embodiment, the drain trap 44 is provided in the take-out flow passage 41 in which the first sensor 45 is provided. Therefore, contact of a liquid (water, etc.) containing components other than the working medium with the first sensor 45 is suppressed. Thus, erroneous detection and occurrence of corrosion of the first sensor 45 can be suppressed.

The first sensor 45 is arranged on the upper side of the drain trap 44. Thus, when a certain amount (concentration) of the working medium is accumulated in a part of the take-out flow passage 41 between the drain trap 44 and the first sensor 45, a liquid component is detected by the first sensor 45. Therefore, erroneous detection is more reliably suppressed.

Since the branch flow passage 43 has the hole 43h, the flow of the supercharged air running from the main flow passage 42 to the first sensor 45 is formed. Thus, detection precision by the first sensor 45 is enhanced.

The second drain trap 54 is provided in the second take-out flow passage 51 in which the second sensor 55 is provided. Therefore, contact of a liquid (water, etc.) containing components other than the working medium with the second sensor 55 is suppressed. Thus, erroneous detection and occurrence of corrosion of the second sensor 55 can be suppressed. The second drain trap 54 can be omitted.

The second sensor 55 is arranged on the upper side of the second drain trap 54. Thus, when a certain amount (concentration) of the working medium is accumulated in a part of the second take-out flow passage 51 between the second drain trap 54 and the second sensor 55, a liquid component is detected by the second sensor 55. Therefore, erroneous detection is more reliably suppressed.

Since the second branch flow passage 53 has the hole 53h, the flow of the supercharged air running from the second main flow passage 52 to the second sensor 55 is formed. Thus, detection precision by the second sensor 55 is enhanced.

### (Fourth Embodiment)

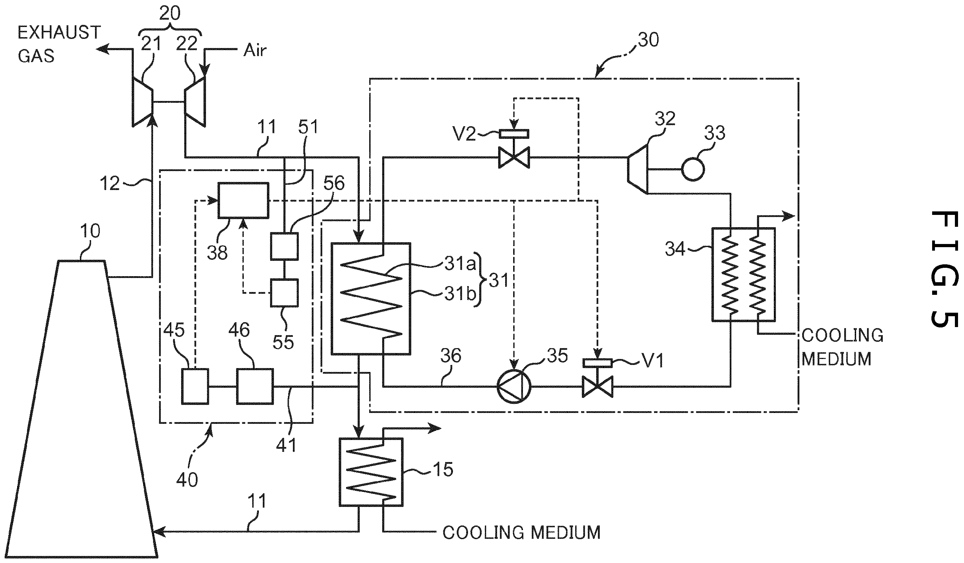

Next, with reference to FIG. 5, a thermal energy recovery device of a fourth embodiment will be described. In the fourth embodiment, only the parts different from the third embodiment will be described, and the same structures, the same operations, and the same effects as the third embodiment will not be described.

In the fourth embodiment, a configuration of a working medium leakage detection device 40 is different from that of the first embodiment. Specifically, in the fourth embodiment, a water content removal mechanism has a dryer 46.

A take-out flow passage 41 is coupled to a part of a suction air line 11 between an evaporator 31 and an air cooler 15. The take-out flow passage 41 may be connected to a casing 31b of the evaporator 31 as well as the first embodiment.

The dryer 46 is provided in an intermediate portion of the take-out flow passage 41. The dryer 46 removes water contents contained in supercharged air that flows through the take-out flow passage 41. A so-called air dryer, a membrane dryer, an absorption dryer, etc. are included in the dryer 46. The air dryer is a device that removes water contents generated by cooling the supercharged air and then brings the supercharged air back to around a normal temperature. The membrane dryer is a device having a hollow fiber membrane made of polymers. The hollow fiber membrane lets water contents contained in the supercharged air that flows into the hollow fiber membrane pass through to the outside of the hollow fiber membrane, and permits passage of the supercharged air. The absorption dryer is a device that removes water contents contained in the supercharged air by letting the supercharged air pass through the inside of a porous medium such as silica gel.

A first sensor 45 is provided in a part of the take-out flow passage 41 on the downstream side of the dryer 46.

A second sensor 55 is provided in a second take-out flow passage 51 connected to a part of the suction air line 11 on the upstream side of the evaporator 31. In an intermediate portion of the second take-out flow passage 51, a second dryer 56 having the same configuration as the dryer 46 is provided. The second dryer 56 can be omitted.

In the thermal energy recovery device of the fourth embodiment, the first sensor 45 is provided in the part of the take-out flow passage 41 on the downstream side of the dryer 46. Thus, contact of a liquid (water, etc.) containing components other than the working medium with the first sensor 45 is suppressed. The same applies to the second sensor 55.

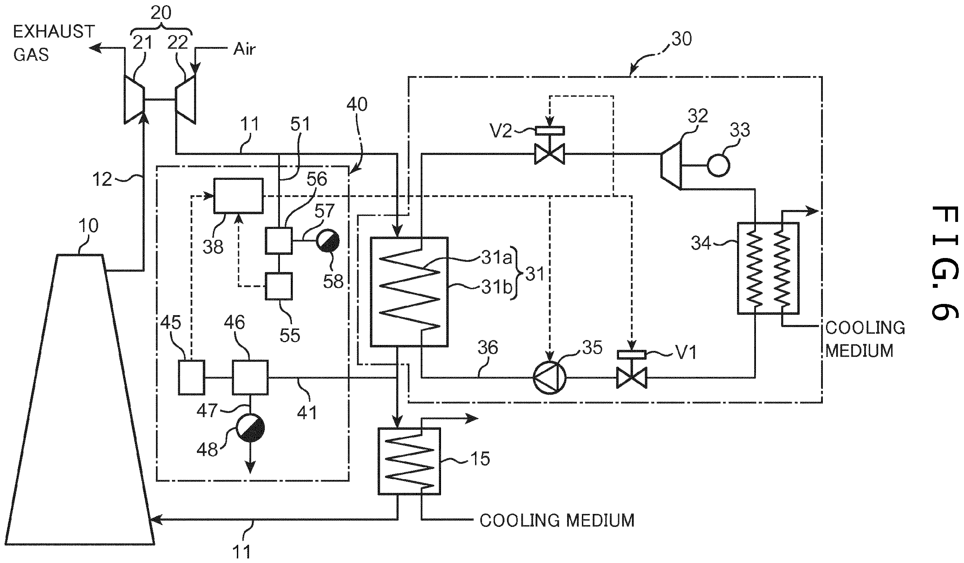

As shown in FIG. 6, the working medium leakage detection device 40 may further have a discharge flow passage 47 through which the water contents removed by the dryer 46 are discharged, and a drain trap 48 provided in the discharge flow passage 47. As shown in FIG. 6, the working medium leakage detection device 40 may further have a second discharge flow passage 57 through which the water contents removed by the second dryer 56 are discharged, and a second drain trap 58 provided in the second discharge flow passage 57. In the mode shown in FIG. 6, the second discharge flow passage 57 and the second drain trap 58 may be omitted.

In the mode where the discharge flow passage 47 is provided, the water contents removed by the dryer 46 are discharged through the discharge flow passage 47. Thus, the water contents are not accumulated in the dryer 46, and the thermal energy recovery device can be continuously operated. The same applies to the second discharge flow passage 57.

### (Fifth Embodiment)

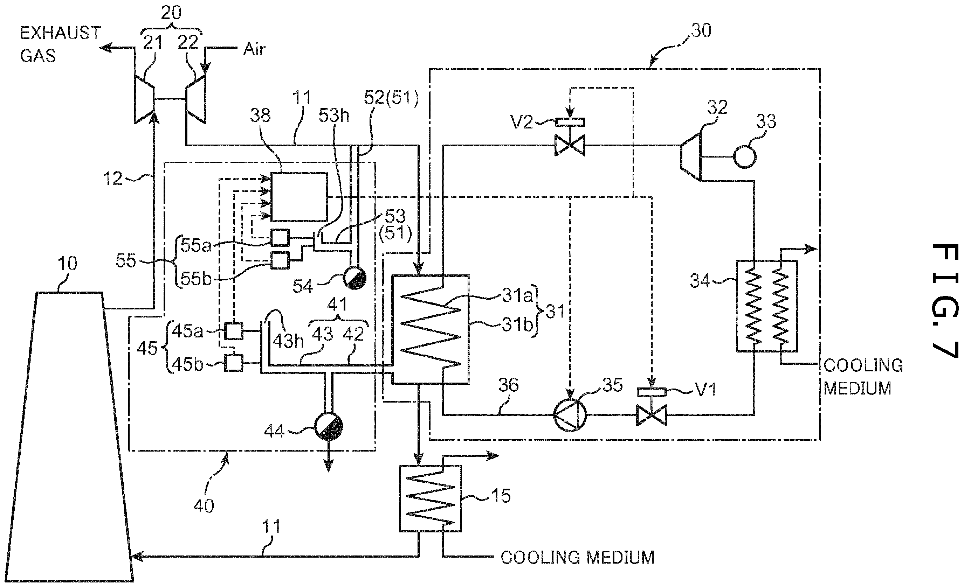

Next, with reference to FIG. 7, a thermal energy recovery device of a fifth embodiment of the present invention will be described. In the fifth embodiment, only the parts different from the third embodiment will be described, and the same structures, the same operations, and the same effects as the third embodiment will not be described.

In the fifth embodiment, a first sensor 45 includes a semiconductor sensor 45a and an infrared sensor 45b. The semiconductor sensor 45a and the infrared sensor 45b are provided in a part of a branch flow passage 43 on the upstream side of a hole 43h. The semiconductor sensor 45a detects a change in a resistance value generated when a metallic oxide semiconductor is brought into contact with a gas as concentration of the gas. This semiconductor sensor 45a detects water contents, carbon monoxide, hydrogen sulfide, and ammonia in addition to a working medium. The semiconductor sensor 45a outputs a signal corresponding to the detected gas concentration. The infrared sensor 45b detects concentration of a gas based on an amount of an infrared ray irradiated from a light emitting portion (light source) to a light receiving portion to be absorbed by the gas existing between the light emitting portion and the light receiving portion. This infrared sensor 45b detects water contents, carbon monoxide, carbon dioxide, sulfur dioxide, and nitrogen oxide in addition to the working medium. The infrared sensor 45b outputs a signal corresponding to the detected gas concentration.

Although both the semiconductor sensor 45a and the infrared sensor 45b detect water contents, the water contents are substantially removed by a drain trap 44 in the present embodiment. Therefore, in a case where detection signals are outputted from both the semiconductor sensor 45a and the infrared sensor 45b, it is possible to judge that the gas detected by these sensors 45a and 45b is the working medium. Thus, in the present embodiment, detection precision of the working medium is enhanced. Although both the semiconductor sensor 45a and the infrared sensor 45b detect carbon monoxide, concentration of carbon monoxide in supercharged air is very low. Thus, a possibility of erroneous detection is ignorable.

A second sensor 55 has the same configuration as the first sensor 45, and includes a semiconductor sensor 55a and an infrared sensor 55b. The second sensor 55 may not have the same configuration as the first sensor 45.

Although both the semiconductor sensor 55a and the infrared sensor 55b detect water contents, the water contents are substantially removed by a second drain trap 54. Therefore, in a case where detection signals are outputted from both the semiconductor sensor 55a and the infrared sensor 55b, it is possible to judge that the gas detected by these sensors is the working medium.

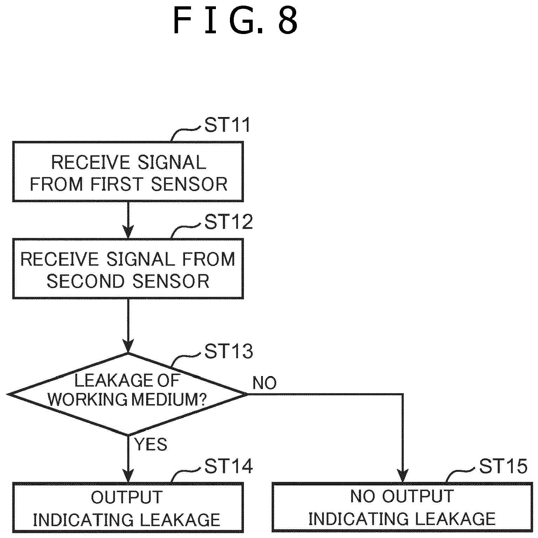

A control unit 38 makes an output indicating leakage of the working medium based on a signal from the semiconductor sensor 45a of the first sensor 45 (first semiconductor signal) and a signal from the infrared sensor 45b (first infrared signal), and a signal from the semiconductor sensor 55a of the second sensor 55 (second semiconductor signal) and a signal from the infrared sensor 55b (second infrared signal). Specifically, as shown in FIG. 8, the control unit 38 receives the signals from the first sensor 45 (the first semiconductor signal and the first infrared signal), and receives the signals from the second sensor 55 (the second semiconductor signal and the second infrared signal) (Steps ST11 and ST12). The control unit 38 determines whether or not the working medium is leaked in the evaporator 31 from the signals from the first sensor 45 and the signals from the second sensor 55 (Step ST13). The control unit 38 determines that the working medium is contained in the air in a case where the following condition is met. This condition is met in a case where: (1) gas concentration indicated by the first semiconductor signal is not less than concentration indicating that the working medium, etc. is contained in the air; and (2) gas concentration indicated by the first infrared signal is not less than the concentration indicating that the working medium, etc. is contained in the air; and (3) gas concentration indicated by the second semiconductor signal is less than the concentration indicating that the working medium, etc. is contained in the air; and (4) gas concentration indicated by the second infrared signal is less than the concentration indicating that the working medium, etc. is contained in the air. When the condition to determine that the working medium is contained in the air is met (YES in Step ST13), the control unit 38 makes the output indicating the leakage of the working medium from the evaporator 31 (Step ST14). This is because, in this case, the working medium detected by the first sensor 45 can be judged as the working medium leaked from the evaporator 31. Meanwhile, when the above condition is not met (NO in Step ST13), the control unit 38 does not make an output indicating leakage of the working medium from the evaporator 31 (Step ST15).

The output indicating the leakage of the working medium from the evaporator 31 is used as a control signal for closing a first on/off valve V1 and a second on/off valve V2. Therefore, when the leakage of the working medium is detected, the first on/off valve V1 and the second on/off valve V2 are closed. The output indicating the leakage of the working medium may include an output of a control signal for stopping the pump 35 in addition to the output of the control signal for closing the on/off valves V1 and V2. In this case, the on/off valves V1 and V2 are closed and the pump 35 is stopped. Therefore, when the leakage of the working medium is detected, the working medium is suppressed from flowing into the evaporator 31.

The configuration in which the first sensor 45 includes the semiconductor sensor 45a and the infrared sensor 45b is not limited to the case where the first sensor 45 is arranged in the evaporator 31. The first sensor 45 may be arranged in a suction air line 11 on the downstream side of the evaporator 31.

The configuration in which the second sensor 55 includes the semiconductor sensor 55a and the infrared sensor 55b is not limited to the case where the second sensor 55 is arranged in the suction air line 11 on the upstream side of the evaporator 31. For example, as in the configuration shown in FIG. 3, the configuration may be adopted in a case where a gas in the atmosphere is detected.

### (Sixth Embodiment)

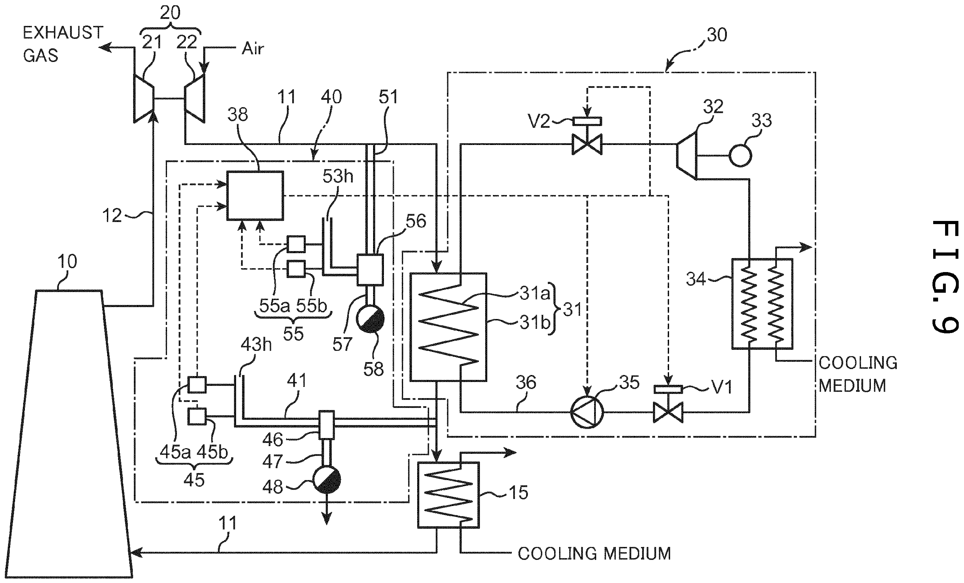

Next, with reference to FIG. 9, a thermal energy recovery device of a sixth embodiment of the present invention will be described. In the sixth embodiment, only the parts different from the modified example of the fourth embodiment (FIG. 6) will be described, and the same structures, the same operations, and the same effects as the modified example of the fourth embodiment will not be described.

In the present embodiment, a first sensor 45 includes a semiconductor sensor 45a and an infrared sensor 45b as well. The semiconductor sensor 45a and the infrared sensor 45b are provided in a part of a branch flow passage 43 on the upstream side of a hole 43h. Therefore, in the present embodiment, detection precision of a working medium is enhanced in comparison to the fourth embodiment. A second sensor 55 also includes a semiconductor sensor 55a and an infrared sensor 55b. The second sensor 55 is not limited to this.

In the present embodiment, as well as the fifth embodiment, a control unit 38 closes a first on/off valve V1 and a second on/off valve V2 in a case where a condition to determine that the working medium is contained is met.

FIG. 9 shows a discharge flow passage 47, a second discharge flow passage 57, a drain trap 48, and a second drain trap 58. However, these can be omitted.

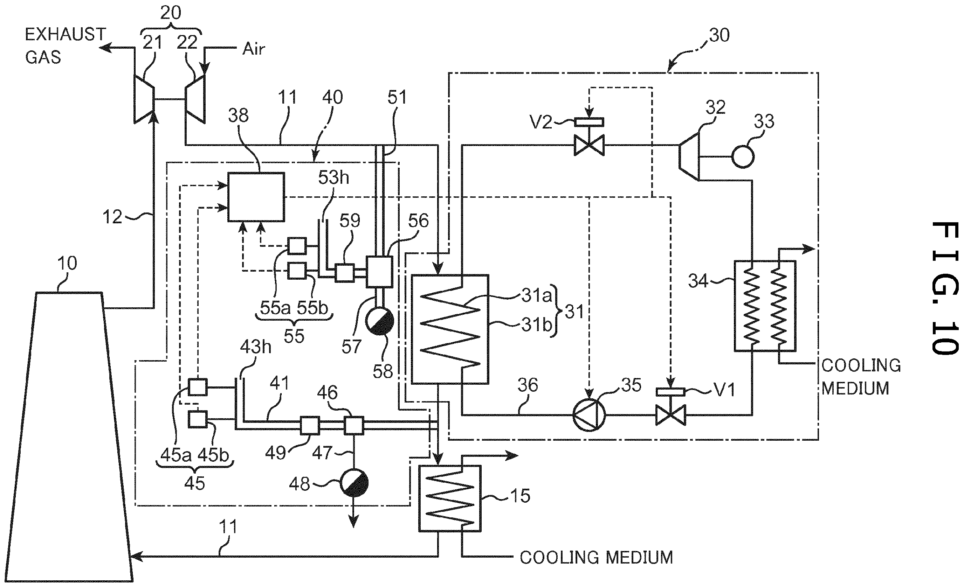

As shown in FIG. 10, a working medium leakage detection device 40 may further have a carbon monoxide removal portion 49 provided in a part of a take-out flow passage 41 between a dryer 46 and the first sensor 45, the carbon monoxide removal portion being capable of removing carbon monoxide. In this mode, the detection precision of the working medium by the first sensor 45 is furthermore enhanced. A second carbon monoxide removal portion 59 may be provided in a part of a second take-out flow passage 51 between a second dryer 56 and the second sensor 55. The carbon monoxide removal portion 49 may be provided in a part of the branch flow passage 43 on the upstream side of the sensors 45a and 45b in the fifth embodiment. In a case where drain water is contained, a drain trap (not shown) may be attached to the carbon monoxide removal portion 49 for the purpose of collecting the drain water.

### (Seventh Embodiment)

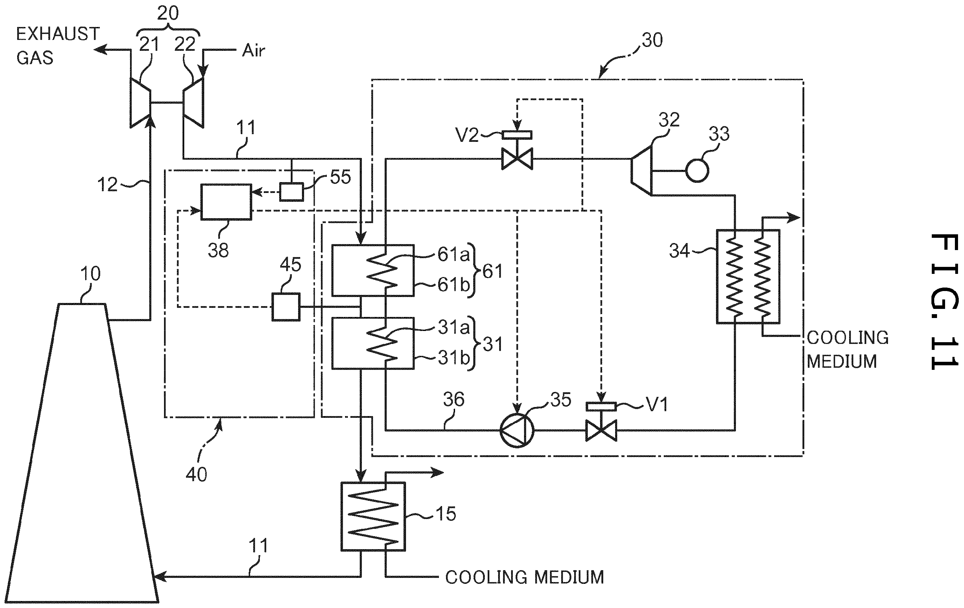

Next, with reference to FIG. 11, a thermal energy recovery device of a seventh embodiment of the present invention will be described. In the seventh embodiment, only the parts different from the first embodiment will be described, and the same structures, the same operations, and the same effects as the first embodiment will not be described.

In the first to sixth embodiments, the purpose is to detect the leakage of the working medium from the evaporator 31. Meanwhile, in the seventh embodiment, leakage of a working medium from a superheater 61 that superheats the working medium gasified by an evaporator 31 is detected. Specifically, the superheater 61 is provided in a circulation flow passage 36 of the working medium on the downstream side of the evaporator 31. The superheater 61 has a heat transfer tube 61a through which the working medium flows, and a casing 61b that accommodates the heat transfer tube 61a. Supercharged air flows into the casing 61b. The superheater 61 exchanges heat between the supercharged air in the casing 61b and the working medium in the heat transfer tube 61a. Thereby, the working medium is brought into a superheated state. That is, the superheater 61 functions as a heater connected to a suction air line 11 through which air supplied from a supercharger 20 to an engine 10 flows and the circulation flow passage 36 through which the working medium flows. The casing 61b functions as an air flow passage serving as a flow passage through which the supercharged air flows. The superheater 61 is not limited to a fin-and-tube heat exchanger.

A first sensor 45 is arranged in the suction air line 11 on the downstream side of the superheater 61. Thereby, it is possible to detect whether or not the working medium is contained in the supercharged air provided for heat exchange with the working medium in the superheater 61. The first sensor 45 may be arranged in the casing 61b of the superheater 61.

In the seventh embodiment, the mode can also be changed to the modes described in the first to sixth embodiments.

### (Eighth Embodiment)

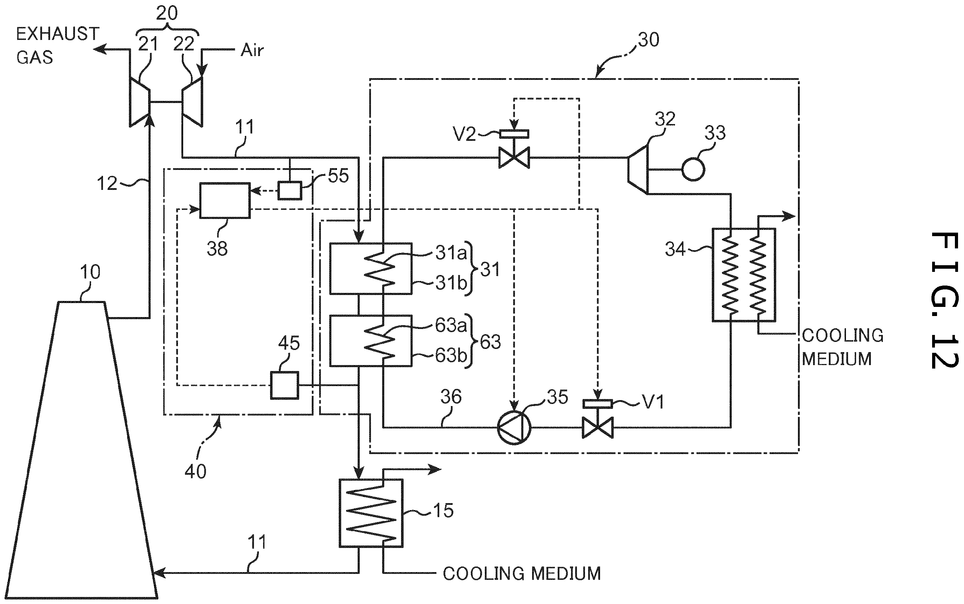

Next, with reference to FIG. 12, a thermal energy recovery device of an eighth embodiment of the present invention will be described. In the eighth embodiment, only the parts different from the first embodiment will be described, and the same structures, the same operations, and the same effects as the first embodiment will not be described.

In the eighth embodiment, leakage of a working medium from a preheater 63 that preheats the working medium before flowing into an evaporator 31 is detected. Specifically, the preheater 63 is provided in a circulation flow passage 36 of the working medium on the upstream side of the evaporator 31. The preheater 63 has a heat transfer tube 63a through which the working medium flows, and a casing 63b that accommodates the heat transfer tube 63a. Supercharged air flows into the casing 63b. The preheater 63 exchanges heat between the supercharged air in the casing 63b and the working medium in the heat transfer tube 63a. At this time, the liquid working medium is heated while remaining in a liquid phase and flows out of the heat transfer tube 63a. The working medium flowing out of the preheater 63 flows into the evaporator 31. The preheater 63 functions as a heater connected to a suction air line 11 through which air supplied from a supercharger 20 to an engine 10 flows and the circulation flow passage 36 through which the working medium flows. The casing 63b functions as an air flow passage serving as a flow passage through which the supercharged air flows. The preheater 63 is not limited to a fin-and-tube heat exchanger.

A first sensor 45 is arranged in the suction air line 11 on the downstream side of the preheater 63. Thereby, it is possible to detect whether or not the working medium is contained in the supercharged air provided for heat exchange with the working medium in the preheater 63. The first sensor 45 may be arranged in the casing 63b of the preheater 63.

In the eighth embodiment, the mode can also be changed to the modes described in the first to sixth embodiments.

The embodiments disclosed herein should be understood as not restriction but only examples in all aspects. The scope of the present invention is indicated not by the above description of the embodiments but by the claims, and includes equivalent meanings to the claims and all modifications within the scope.

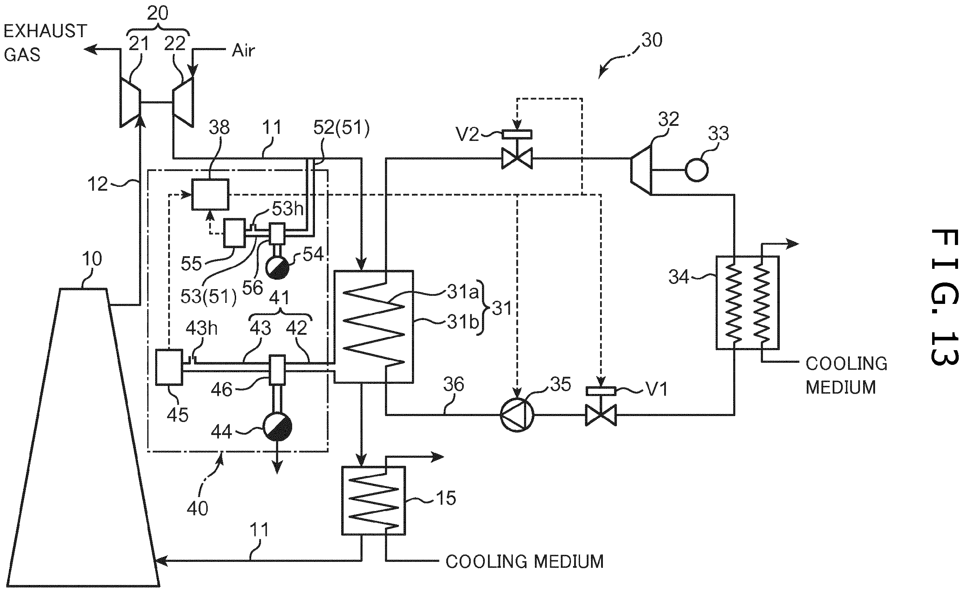

For example, in the first embodiment, a dryer 46 may be provided in a connection portion of a take-out flow passage 41 between a main flow passage 42 and a branch flow passage 43 as shown in FIG. 13. A second dryer 56 may be provided in a connection portion of a second take-out flow passage 51 between a second main flow passage 52 and a second branch flow passage 53.

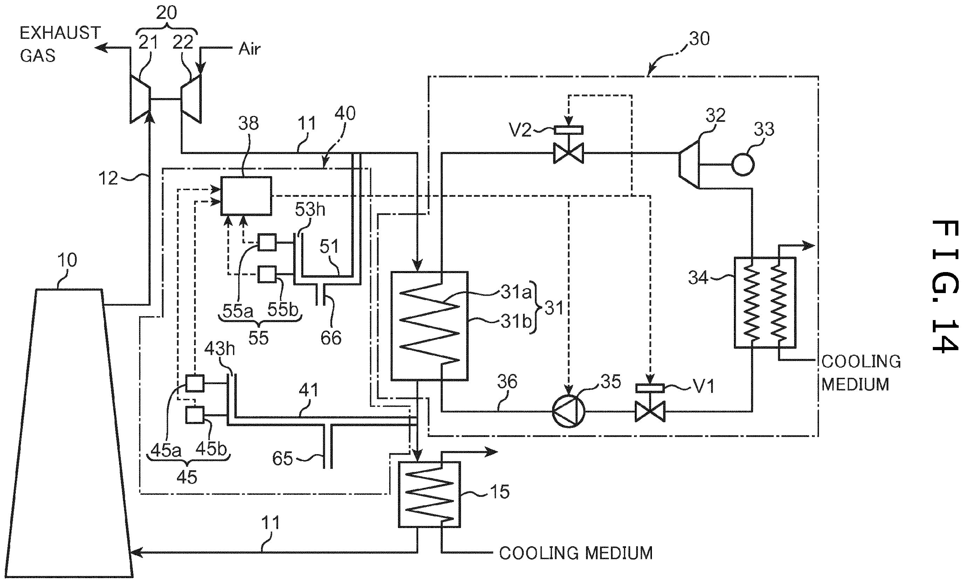

In the sixth embodiment, a water content removal mechanism may be a liquid draining flow passage 65 branching from the take-out flow passage 41 so as to extend downward, the liquid draining flow passage from which water contents (liquid) can be discharged downward from the take-out flow passage 41 as shown in FIG. 14. Similarly, a liquid draining flow passage 66 serving as the water content removal mechanism may be provided in the second take-out flow passage 51. The liquid draining flow passage 66 extends downward from the second take-out flow passage 51. In the mode shown in FIG. 5, in place of the dryer 46 and the second dryer 56, a liquid draining flow passage serving as a water content removal mechanism may be provided. In the mode shown in FIG. 7, in place of the drain trap 44 and the second drain trap 54, a liquid draining flow passage serving as a water content removal mechanism may be provided.

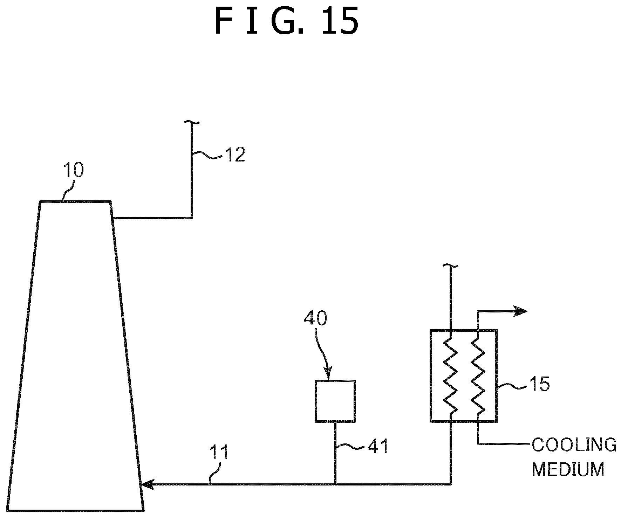

As shown in FIG. 15, the upstream side end portion of the take-out flow passage 41 may be coupled to a part of the suction air line 11 between the air cooler 15 and the engine 10. Alternatively, the upstream side end portion of the take-out flow passage 41 may be coupled to a lower portion of a casing of the air cooler 15 or a part of the suction air line 11 between the evaporator 31 and the air cooler 15.

The first on/off valve V1 may be provided in a part of the circulation flow passage 36 between the pump 35 and the evaporator 31.

## Claims

1. A working medium leakage detection device comprising:
a first sensor formed by a sensor capable of detecting a working medium;
a second sensor formed by a sensor capable of detecting the working medium; and
a control unit that makes an output indicating leakage of the working medium when the first sensor detects the working medium whereas the second sensor does not detect the working medium,
wherein the first sensor is arranged to detect the working medium in an air flow passage in a heater connected to a suction air line through which air supplied from a supercharger to an engine flows and a circulation flow passage through which the working medium flows, or to detect the working medium in a part of the suction air line on the downstream side of the heater, and
wherein the second sensor is arranged to detect the working medium in neither the air flow passage in the heater nor the part of the suction air line on the downstream side of the heater.

2. The working medium leakage detection device according to claim 1, further comprising:
a take-out flow passage with which part of the air is taken out from the air flow passage of the heater, or a part of the suction air line between the heater and the engine; and
a water content removal mechanism provided in the take-out flow passage, the water content removal mechanism that removes water contents contained in the air,
wherein the first sensor is arranged in the take-out flow passage.

3. The working medium leakage detection device according to claim 2,
wherein the water content removal mechanism includes a drain trap that permits passage of a liquid and inhibits passage of a gas, and
wherein the first sensor is arranged on the upper side of the drain trap in the take-out flow passage.

4. The working medium leakage detection device according to claim 2 or 3,
wherein the take-out flow passage has:
a main flow passage in which the water content removal mechanism is provided; and
a branch flow passage branching from the main flow passage, and
wherein the first sensor is arranged in the branch flow passage.

5. The working medium leakage detection device according to claim 4,
wherein the water content removal mechanism further has a dryer provided in a connection portion between the main flow passage and the branch flow passage, the dryer that removes water contents contained in the air.

6. The working medium leakage detection device according to claim 2,
wherein the water content removal mechanism has a dryer that removes water contents contained in the air.

7. The working medium leakage detection device according to claim 6, further comprising:
a discharge flow passage through which the water contents removed by the dryer are discharged; and
a drain trap provided in the discharge flow passage, the drain trap that permits passage of a liquid and inhibits passage of a gas.

8. The working medium leakage detection device according to any one of claims 2 to 7,
wherein at least one of the first sensor and the second sensor includes:
a semiconductor sensor capable of detecting water contents, the working medium, carbon monoxide, hydrogen sulfide, and ammonia; and
an infrared sensor capable of detecting water contents, the working medium, carbon monoxide, carbon dioxide, sulfur dioxide, and nitrogen oxide.

9. The working medium leakage detection device according to claim 8, further comprising:
a carbon monoxide removal portion capable of removing carbon monoxide.

10. The working medium leakage detection device according to claim 2,
wherein the take-out flow passage has a hole for forming a flow of the air running from an upstream side end portion of the take-out flow passage to the first sensor.

11. A thermal energy recovery device comprising:
a heater connected to a suction air line through which air supplied from a supercharger to an engine flows and a circulation flow passage through which a working medium flows;
a power recovery machine connected to an expander to be driven by the working medium on the downstream side of the heater in the circulation flow passage; and
the working medium leakage detection device according to any one of claims 1 to 10.

12. The thermal energy recovery device according to claim 11, further comprising:
a condenser provided on the upstream side of the heater in the circulation flow passage;
an expander provided on the downstream side of the heater in the circulation flow passage;
a first on/off valve provided in a part of the circulation flow passage between the condenser and the heater; and
a second on/off valve provided in a part of the circulation flow passage between the heater and the expander,
wherein the control unit closes the first on/off valve and the second on/off valve when making the output indicating the leakage of the working medium.
